**Europäisches Patentamt**

**European Patent Office**

**Office européen des brevets**

(11) Veröffentlichungsnummer: **0 174 646**

**A1**

(12) # EUROPÄISCHE PATENTANMELDUNG

(21) Anmeldenummer: **85111470.2**

(22) Anmeldetag: **11.09.85**

(51) Int. Cl.⁴: **F 16 B 39/286**
**F 16 B 35/00, F 16 B 29/00**
**F 16 B 21/10, G 12 B 5/00**
**//G01B21/04**

(30) Priorität: **14.09.84 DE 3433738**

(43) Veröffentlichungstag der Anmeldung:
**19.03.86 Patentblatt 86/12**

(84) Benannte Vertragsstaaten:
**CH DE FR GB LI SE**

(71) Anmelder: **Firma Carl Zeiss**

**D-7920 Heidenheim (Brenz)(DE)**

(84) Benannte Vertragsstaaten:
**CH DE FR LI SE**

(71) Anmelder: **CARL-ZEISS-STIFTUNG Trading as CARL ZEISS**

**D-7920 Heidenheim (Brenz)(DE)**

(84) Benannte Vertragsstaaten:
**GB**

(72) Erfinder: **Aehnelt, Peter**
**Kapellenweg 7**
**D-7082 Oberkochen(DE)**

(72) Erfinder: **Trieb, Gerhard**
**Ulmenweg 10**
**D-7923 Königsbronn(DE)**

(54) **Einrichtung zur lagemässigen Fixierung eines Gewindebolzens.**

(57) Der zu konternde Gewindebolzen besteht aus zwei achsial gegeneinander verschiebbaren Teilen (42, 43) die durch eine Zug- oder Druckschraube (48) verspannt werden, die in eine Gewinde-Innenbohrung in einem der beiden Teile (42, 43) des Bolzens eingeschraubt ist.

Fig. 5

**EP 0 174 646 A1**

Croydon Printing Company Ltd.

Beschreibung:

Einrichtung zur lagemäßigen Fixierung eines Gewindebolzens

In vielen Bereichen der Technik, insbesondere im Maschinenbau und feinmechanischem Gerätebau müssen häufig Teile, die großen Belastungen ausgesetzt sind, mit hoher Genauigkeit lagemäßig fixiert werden. Als Beispiel sei hier die Befestigung von aerostatischen Lagern an den beweglichen Teilen einer Koordinaten-Meßmaschine genannt. Diese Lager, auf
denen z.B. das Gewicht des verfahrbaren Portals einer solchen Maschine in Höhe von mehreren 100 kg ruht, müssen mit einer Genauigkeit im
µm-Bereich lagemäßig fixiert sein.

Gewöhnlich verwendet man zu diesem Zweck, d.h. zur Befestigung des einzustellenden Teils, in einen Tragkörper eingeschraubte Gewindebolzen,
die mit einer aufgeschraubten Mutter durch Kontern fixiert werden.

Dabei tritt jedoch sehr häufig das Problem auf, daß der vorher korrekt
eingestellte Gewindebolzen nach dem Festziehen der Kontermutter über
die zulässige Toleranz hinaus verstellt ist. Das Fixieren des Gewindebolzens in einer hochgenau vorgegebenen Position ist daher eine relativ
langwierige Angelegenheit, die ein mehrfaches Lösen und Festziehen der
Kontermutter und dazwischen vorzunehmendes Vermessen der eingestellten
Position erfordert.

Es ist die Aufgabe der vorliegenden Erfindung diese Einstellprozedur zu
verkürzen.

Gelöst wird diese Aufgabe durch eine Ausbildung des Gewindebolzens
gemäß den im Kennzeichen des Hauptanspruches aufgeführten Merkmalen.

Da der Gewindebolzen aus zwei achsial gegeneinander verschiebbaren Teilen besteht, die im Gewinde des Tragkörpers durch eine separate Zug-
bzw. Druckschraube gegeneinander verspannt werden, kann das Gewindespiel zwischen Bolzen und Tragkörper schon vor dem endgültigen Einstellen der Position des Bolzens beseitigt werden. Außerdem tritt infolge
der hohen Reibung in dem im Durchmesser großen Gewindeeingriff zwischen

Bolzen und Tragkörper - verglichen mit dem Gewindeeingriff zwischen
Bolzen und Druckschraube - beim anschließenden Festziehen der Druckschraube keine Verstellung des Bolzens auf. Der Einstellvorgang ist bei
Verwendung des erfindungsgemäßen Bolzens deshalb stark verkürzt.

Die beiden Teile des Bolzens können beispielsweise völlig voneinander
getrennt sein. In diesem Falle ist eine Verdrehsicherung zwischen beiden Teilen vorzusehen, die das Einschrauben der beiden Bolzenteile in
den Tragkörper erleichtert, in dem sie dafür sorgt, daß das eine Teil
durch das andere beim Einschrauben mitgenommen wird.

Besonders vorteilhaft ist es jedoch, wenn die beiden Teile des Bolzens
durch einen stauch- oder dehnbaren Abschnitt verminderter Zugfestigkeit
formschlüssig miteinander verbunden sind, denn dann sind Umkehrlose
zwischen den beiden Teilen des Bolzens bei dessen Einstellung vermieden. Dieser Abschnitt verminderter Zugfestigkeit kann zweckmäßig durch
mehrere, radial in den Gewindebolzen z.B. eingesägte Schlitze realisiert werden.

Weitere Vorteile der Erfindung ergeben sich aus der nachstehenden Beschreibung von Ausführungsbeispielen anhand der Fig. 1-5 der beigefügten Zeichnungen.

Fig. 1   zeigt einen Schnitt durch einen in seinen Tragkörper eingeschraubten Gewindebolzen nach einem ersten Ausführungsbeispiel;

Fig. 2   zeigt einen Schnitt durch einen in seinen Tragkörper eingeschraubten Gewindebolzen nach einem zweiten Ausführungsbeispiel;

Fig. 3   zeigt einen Schnitt durch einen in seinen Tragkörper eingeschraubten Gewindebolzen nach einem dritten Ausführungsbeispiel;

Fig. 4   zeigt einen Schnitt durch einen in seinen Tragkörper eingeschraubten Gewindebolzen nach einem vierten Ausführungsbeispiel;

Fig. 5    zeigt einen Schnitt durch einen Gewindebolzen nach einem bevorzugten fünften Ausführungsbeispiel.

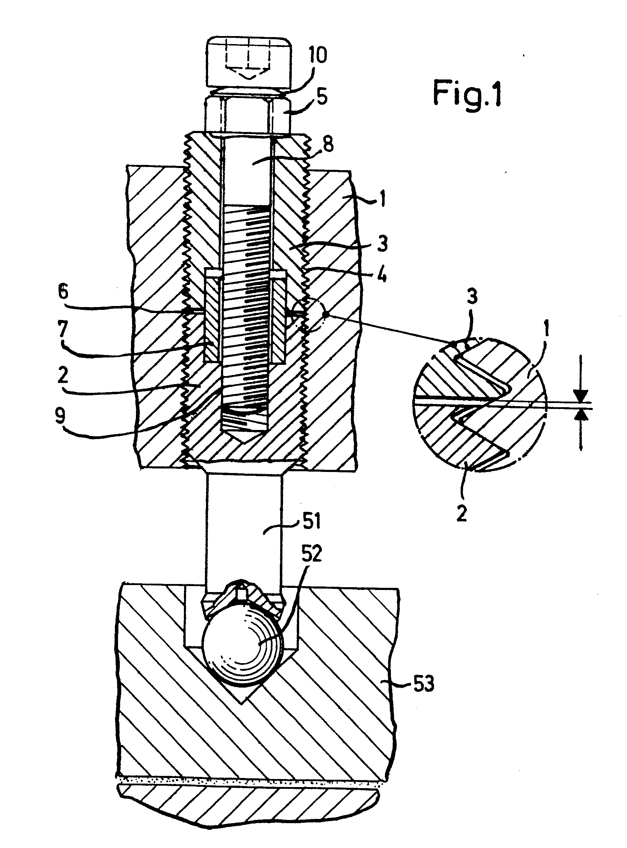

Im Ausführungsbeispiel der Fig. 1 ist mit 1 ein Tragkörper bezeichnet,
in dessen Bohrung mit Innengewinde 4 ein aus zwei Teilen 2 und 3 bestehender Gewindebolzen eingeschraubt ist. Nachfolgend wird das Teil 2 als
Führungsteil und das Teil 3 als Konterteil des Bolzens bezeichnet.

Bei dem Tragkörper 1 handelt es sich um den Fuß des Portals einer Mehrkoordinaten-Meßmaschine, das von einem Luftlager getragen wird. Dies
mit 53 bezeichnete Luftlager wird bezüglich seiner Lage mit dem Bolzen
2/3 eingestellt, der sich mit seinem unteren Endabschnitt 51 über eine
Stahlkugel 52 auf dem Lager 53 abstützt.

Zur Verstellung des Bolzens 2/3 besitzt das Konterteil 3 einen Sechskant 5. Das Führungsteil 2 und das Konterteil 3 des Bolzens sind zum
Zwecke der leichteren Montage durch einen Mitnehmer 7 gegen radiales
Verdrehen gesichert.

Die beiden Teile 2 und 3 des Bolzens sind mit einer zentrischen Bohrung
versehen, die im Bereich des Führungsteils 2 ein Gewinde 9 trägt. Eine
in das Gewinde 9 eingreifende Zugschraube 8 stützt sich über eine Tellerfeder 10 auf der Oberseite des Sechskants 5 am Konterteil 3 ab und
hält die beiden Teile 2 und 3 des Gewindebolzens zusammen.

Nach dem Einschrauben in das Gewinde 4 des Tragkörpers 1 kann der Gewindeeingriff zwischen Bolzen und Tragkörper durch Anziehen der Zugschraube 8 spielfrei gemacht werden. Dabei verlagern sich das Führungsteil 2 und Konterteil 3 des Bolzens achsial gegeneinander, wie das in
dem danebenstehenden Detailzeichnung dargestellt ist. Anschließend läßt
sich der Bolzen 2/3 durch Drehen am Sechskant 5 schwergängig aber präzise bezüglich seiner genauen Lage einjustieren. Schließlich wird der
Bolzen fixiert, indem die Zugschraube 8 fest angezogen wird. Dabei
verlagert sich der Bolzen 2/3 nicht mehr.

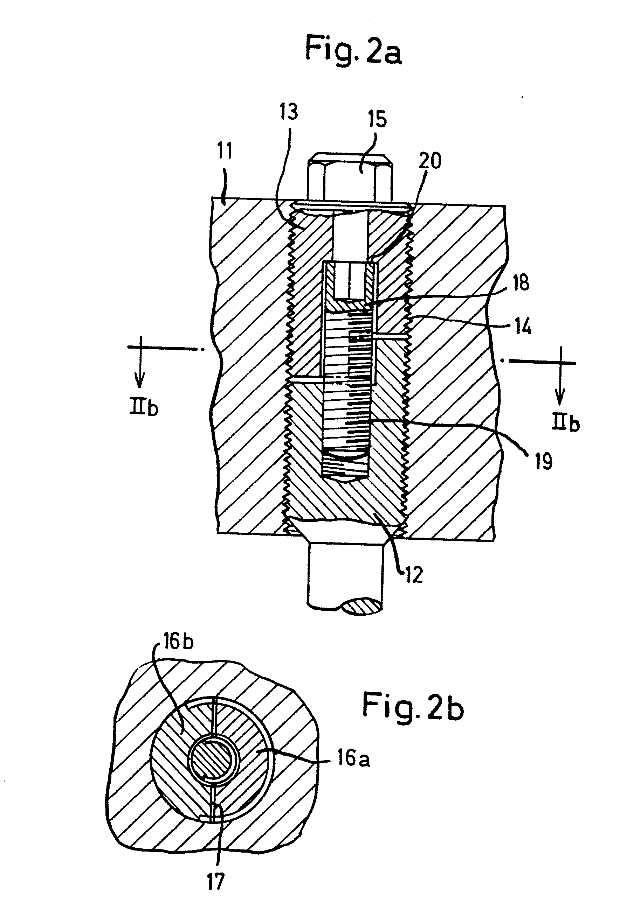

In dem alternativ verwendbaren Ausführungsbeispiel nach Fig. 2a und 2b
ist auf einen separaten Mitnehmer zwischen den Teilen 12 und 13 des Gewindebolzen verzichtet. Die Teile 12 und 13 sind vielmehr unsymmetrisch durch einen teilweise achsial verlaufenden Schlitz 17 so getrennt, daß zwei ineinandergreifende Abschnitte 16a und 16b am Führungsteil 12 bzw. am Konterteil 13 entstehen.

Beide Teile 12 und 13 des Bolzens besitzen eine zentrische Bohrung, die im Bereich des Führungsteils 12 ein Gewinde 19 aufweist. Darin ist eine Druckschraube 18 eingeschraubt, die sich gegen eine Schulter 20 in der Bohrung des Konterteils 13 abstützt und beim Anziehen die beiden Teile 12 und 13 auseinanderdrückt und so im Gewinde 14 des Tragkörpers 11 verklemmt.

Die Einstellung des in Fig. 2a und b dargestellten Bolzens erfolgt wie in Fig. 1 beschrieben mit dem Unterschied, daß Führungsteil und Konterteil des Bolzens auseinandergedrückt anstatt gegeneinander gezogen werden. Zweckmäßig ist es, die Variante zu wählen, bei der die von der eingesetzten Schraube 8 bzw. 18 ausgeübte Kraft und die externe Last, z.B. des Lagers 53, gleichgerichtet sind, da der Kraftfluß dann direkt über den Gewindeeingriff zwischen Führungsteil und Tragkörper läuft (siehe Fig. 1) und nicht den Umweg über die Druckschraube und den Gewindeeingriff zwischen Konterteil und Tragkörper nimmt (Fig. 2).

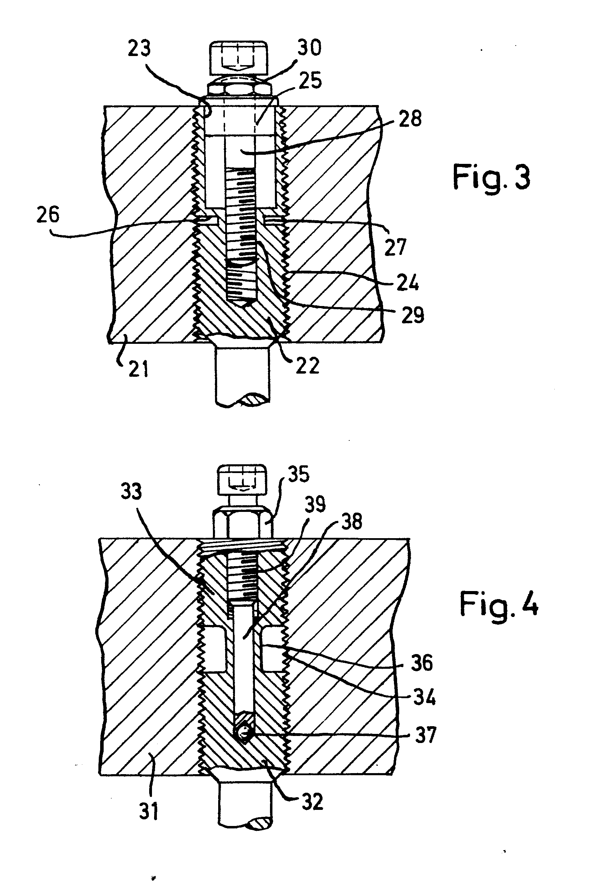

Im Ausführungsbeispiel nach Fig. 3 sind die beiden Teile 22 und 23 des Gewindebolzens formschlüssig miteinander verbunden und nur durch eine Einschnürung 27 voneinander getrennt. Die Innenbohrung des Konterteils 23 ist im Durchmesser größer als der Außendurchmesser der Einschnürung 27 gewählt, so daß ein verformbarer Ringabschnitt 26 entsteht, über den die Teile 22 und 23 miteinander verbunden sind. Die in das Innengewinde 29 im Führungsteil 22 eingeschraubte Zugschraube 28 stützt sich wieder über eine Tellerfeder 30 auf dem den Sechskant tragenden Teil 25 des Konterteils 23 ab.

Hier verschieben sich die beiden Teile 22 und 23 im Gewinde 24 des Tragkörpers 21 beim Fixieren des Bolzens durch Anziehen der Zugschraube 28 ebenfalls.

Auch beim Ausführungsbeispiel nach Fig. 4 sind die beiden Teile 32 und 33 des Gewindebolzens wieder durch eine Einschnürung 36 voneinander getrennt. Die Einschnürung 36 verminderter Zugfestigkeit wird beim Fixieren des Bolzens 32/33 gedehnt. Diese Dehnung wird mit Hilfe der Druckschraube 38 vorgenommen, die sich auf einer Kugel 37 in einer zentrischen Bohrung des Führungsteils 32 abstützt und in ein Innengewinde 39 im Konterteil 33 des Gewindebolzens eingeschraubt ist.

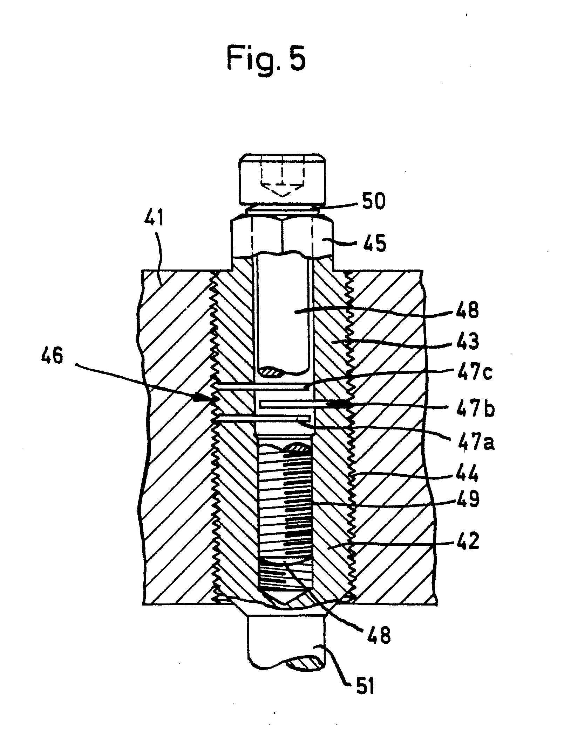

Ein bevorzugtes Ausführungsbeispiel der Erfindung ist in Fig. 5 dargestellt. Hier sind die beiden Teile 42 und 43 des Gewindebolzens durch drei alternierend von gegenüberliegenden Seiten eingesägte Schlitze 47a, 47b und 47c voneinander getrennt, die sich über die Mittelachse des Bolzens hinaus erstrecken.

Durch diese radialen Schlitze 47a-c ist ein Bereich 46 verminderter Festigkeit entstanden, der sich durch eine in das Innengewinde 49 im Führungsteil 41 eingreifende und am Sechskant 45 des Konterteils 43 abstützende Zugschraube 48 stauchen läßt. Dabei wird der Bolzen 42/43 wie im Zusammenhang mit Fig. 1 beschrieben gekontert.

8001974646

Patentansprüche:

1. Einrichtung zur lagemäßigen Fixierung eines Gewindebolzens in einem Tragkörper mit Innengewinde, wobei der Gewindebolzen und der Tragkörper durch Kontern miteinander verspannt werden, dadurch gekennzeichnet, daß der Gewindebolzen aus zwei achsial gegeneinander verschiebbaren Teilen (2,3;12,13;22,23;32,33;42,43) besteht, die beide ein in das Innengewinde (4,14,24,34,44) des Tragkörpers eingreifendes Außengewinde tragen, und eine zusätzliche Zug- bzw. Druckschraube (8;18;28;38;48) vorgesehen ist, die in ein Innengewinde (9;19;29;39;49) in einem der beiden verschiebbaren Teile des Bolzens eingreift und sich gegen den anderen Teil abstützt.

2. Einrichtung nach Anspruch 1, dadurch gekennzeichnet, daß die beiden Teile (2,3;12,13) des Bolzens völlig voneinander getrennt sind und eine Verdrehsicherung (Mitnehmer 6;16a,b) zwischen beiden Teilen angeordnet ist.

3. Einrichtung nach Anspruch 1, dadurch gekennzeichnet, daß die beiden Teile (22,23;32,33;42,44) des Bolzens durch einen stauch- bzw. dehnbaren Abschnitt (26,27;36,46) verminderter Zugfestigkeit formschlüssig miteinander verbunden sind.

4. Einrichtung nach Anspruch 3, dadurch gekennzeichnet, daß der dehnbare Abschnitt (46) durch mehrere radiale Schlitze (47a-c) gebildet ist, deren Tiefe zwischen dem Halbmesser und dem Durchmesser des Gewindebolzens liegt.

5. Einrichtung nach Anspruch 1-4, dadurch gekennzeichnet, daß der Gewindebolzen sich auf einem aerostatischen Lager (52/53) abstützt und zu dessen lagemäßigen Einstellung dient.

Fig.1

## Fig. 2a

## Fig. 2b

Fig. 3

Fig. 4

Fig. 5

Europäisches
Patentamt

# EUROPÄISCHER RECHERCHENBERICHT

## EINSCHLÄGIGE DOKUMENTE

EP 85111470.2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | <u>DD - A - 153 175</u> (KANAZAWA, MASAO)  * Anspruch 1; Fig. *  -- | 1 | F 16 B 39/286 |
| A | <u>DD - A - 153 174</u> (KANAZAWA, MASAO)  * Anspruch 1; Fig. 1,3 *  -- | 1 | F 16 B 35/00  F 16 B 29/00  F 16 B 21/10  G 12 B  5/00 |
| A | <u>EP - A1 - 101 783</u> (IWATA BOLT KO-GYO KABUSHIKI KAISHA)  * Anspruch 1; Fig. 3,4 *  -- | 1 | //G 01 B 21/04 |
| A | <u>GB - A - 2 119 886</u> (ALAN ELGAR HER-BERT ELLIS)  * Zusammenfassung *  ---- | 1 | |

| | | | RECHERCHIERTE SACHGEBIETE (Int Cl 4) |
|---|---|---|---|
| | | | F 16 B |

Der vorliegende Recherchenbericht wurde für alle Patentansprüche erstellt.

| Recherchenort | Abschlußdatum der Recherche | Prüfer |
|---|---|---|
| WIEN | 14-11-1985 | REIF |